# EUROPEAN PATENT APPLICATION

(11) **EP 3 040 993 A1**
(43) Date of publication of application: **06.07.2016**
(21) Application number: 15202626.6
(22) Date of filing: 23.12.2015
(51) Int. Cl.: G11B 3/60, H04R 11/08

(54) **STYLUS LIGHTING ON THE TONE ARM OF A TURNTABLE**

(30) Priority: 02.01.2015 US 201562099290 P
(71) Applicant: Gibson Brands, Inc., Nashville, TN 37217 (US)
(72) Inventor: Jursch, Gustave, Agoura Hills, CA 91301 (US); Williams, Brian Lee, Camarillo, CA (US)
(74) Representative: dompatent von Kreisler Selting Werner - Partnerschaft von Patent- und Rechtsanwälten mbB

(57) **Abstract**

A system and method for illuminating a stylus on a tone arm for a turntable or controller device is provided. The lighted stylus is consistent in light quality and intensity regardless of tone arm location or position while in use. The system and method includes providing a light source on the tone arm. The light source being directed toward the stylus. The system and method keeps the relative position of the light source and the stylus consistent throughout the entire tone arm range of motion. As such, the light quality and intensity at the stylus is consistent through all tone arm motion.

## Description

### FIELD OF THE INVENTION

This disclosure is directed toward lighting a tone arm assembly. More specifically to lighting a tone arm assembly in a turntable application such that the stylus location is illuminated and the light quality is consistent at all tone arm positions.

### BACKGROUND

Typical turntable and controller assemblies use a single light source positioned on a side of a rotatable platter to illuminate a surface of an album in an area where the stylus (needle) may be positioned. The light source is statically positioned relative to tone arm stylus location. As such, the light source loses effectiveness as the tone arm moves away from the light source. What is needed is a system and method of providing lighting of the tone arm/stylus region that does not lose lighting effectiveness as the tone arm/stylus is moved throughout its entire range of motion.

### SUMMARY

In an illustrative embodiment a lighted audio system assembly is provided. The system includes a housing and a rotatable platter supported by the housing. The platter is configured to support an album thereon. The system further includes a tone arm assembly rotatable about a hub positioned on the housing. The tone arm assembly includes a headshell opposite the hub, the headshell includes a stylus for engaging the album. Further, the system includes a light source mounted on the tone arm and configured to direct light toward the stylus.

In another illustrative embodiment, a tone arm assembly for a turntable or controller is included. The tone arm assembly includes a tone arm having a first end and a second end. A hub assembly is adjacent the first end. A headshell is adjacent the second end, opposite the first end. A stylus is positioned within the headshell. Also included is a light source for directing light at the stylus.

In another illustrative embodiment, a method of providing a lighted stylus is included. The method incudes providing a tone arm assembly, the tone arm assembly having a hub at a first end, and a headshell at a second end, opposite the first end. The headshell includes a stylus. Also included is providing a light source moveable with the headshell and configured to illuminate the stylus. The method further includes illuminating the stylus to provide a lighted region surrounding the stylus.

Other principal features of the current disclosure will become apparent to those skilled in the art upon review of the following drawings, the detailed description, and the appended claims.

### BRIEF DESCRIPTION OF THE DRAWINGS

Illustrative embodiments will be described referring to the accompanying drawings, wherein like numerals denote like elements.
Fig. 1 depicts a top view of a system diagram of an audio system in accordance with an illustrative embodiment.
Fig. 2 depicts a picture of an audio system in accordance with an illustrative embodiment.
Fig. 3 depicts a first side view of tone arm assembly in accordance with an illustrative embodiment.
Fig. 4 depicts a flow diagram illustrating example operations performed by a lighted tone arm assembly of the sound system of Figs. 1 and 2 in accordance with an illustrative embodiment.

### DETAILED DESCRIPTION

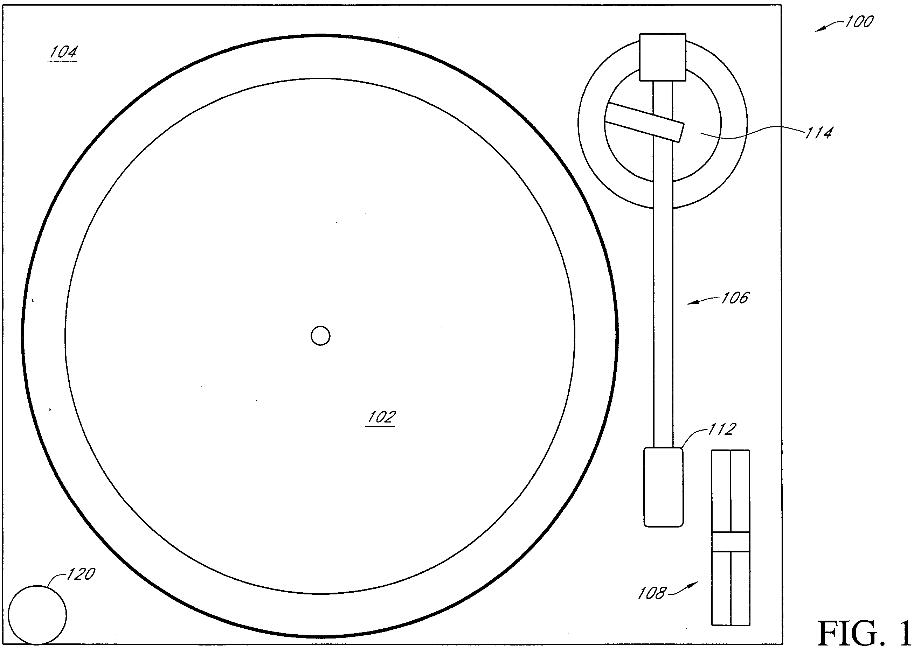

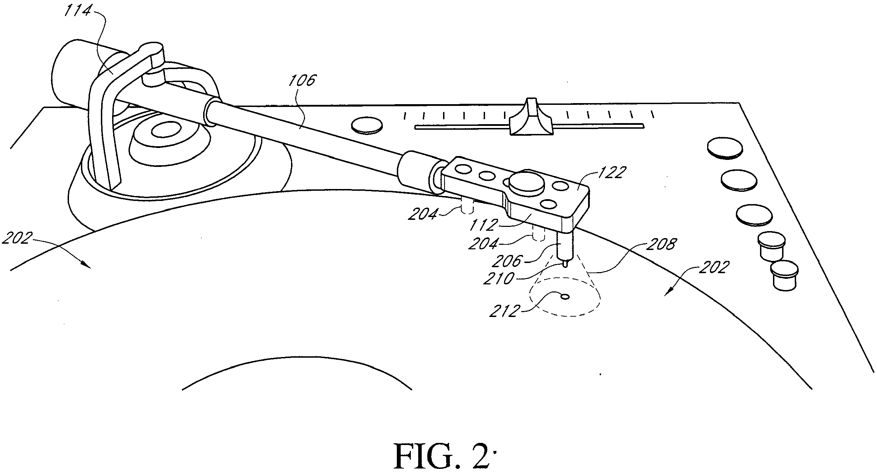

Referring to Figs. 1 and 2, an audio system 100 is shown in accordance with an illustrative embodiment. In an illustrative embodiment, audio system 100 may include a rotatable platter 102, a housing 104, a tone arm 106, headshell 112 and light controller 120. In the illustrative embodiment, audio system 100 is a turntable. However, audio system 100 may also be a controller (not shown) such as those used to "scratch" music or otherwise manipulate the rotating platter 102 while in use. The audio system 100 may include other such features as pitch (or other) faders 108, or other controls (not shown) etc. without departing from the spirt and scope of this disclosure. As will be appreciated by those skilled in the art, the overall layout of the various component features is variable based on size and features of the specific audio system 100 employed. And as such, is not intended to limit the scope of this disclosure.

In the illustrative embodiment, platter 102 is configured to receive an album 202 such as a vinyl LP or EP item typically referred to as a "record", and rotate the album 202 as a set speed. The headshell 112 includes a stylus 206. The stylus 206 is often referred to as a "needle" and is configured to engage grooves in the album 202 thereby facilitating playback of the recorded material on the album 202. Based upon playing position, the headshell 112 end of the tone arm 106 may be positioned at an outer edge of the album 202 or more toward the center of the album 202.

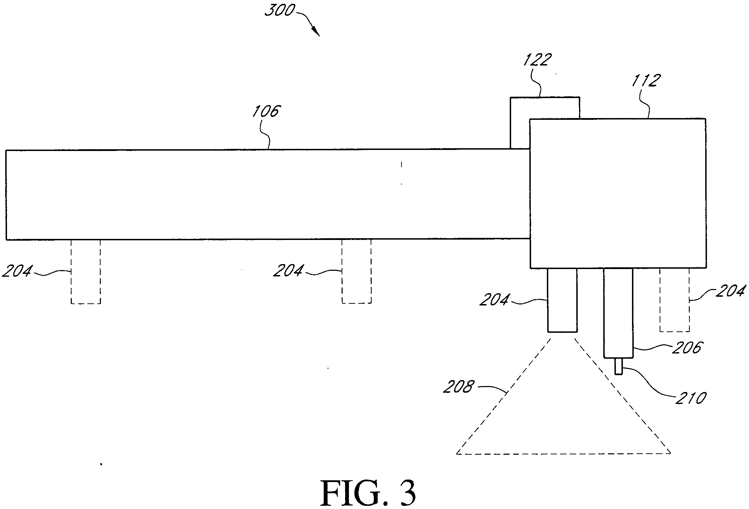

With reference to Figs. 2 and 3, in the illustrative embodiment, a light 204 is positioned on the tone arm 106 and is configured to illuminate the stylus 206. As depicted, the light 204 may be positioned on the headshell 112. However, such positioning is not intended to be limiting. The light 204 may be positioned at any location along the tone arm 106. Likewise, the light 204 is shown as being positioned between the stylus 206 and the hub 114. This illustrative configuration is not required. The present disclosure includes a configuration where the stylus 206 is positioned between the light 204 and the hub 114.

Those skilled in the art will appreciate that by having the light 204 positioned on the tone arm 106, at a fixed position relative to the stylus 206, will yield a consistent light quality and intensity at the stylus 206 throughout the full range of tone arm 106 motion. In use, a consistent lighted area 208 is created on the album 202. As such, a user has the same light quality and intensity illuminating the stylus 206 and lighted region 208 at any position on the album 202.

The light 204 is positioned such that any desired amount of the stylus 206 or size of lighted region 208 is illuminated. A light controller 120 is configured to control light 204 status. The light status may be as simple as off or on. Additionally, the light controller 120 may be configured to control light intensity wherein a user may increase/decrease light intensity through a range of on and off. Likewise, if multiple lights are used, the light controller 120 may be configured to control various aspects of all lights 204 (not shown).

As depicted in the Figs., the light 204 may be a standalone, discrete unit. Such as, for example, an individual light emitting diode (LED's). Conversely, the light 204, may be a collection of light elements such as LED strings or other connected lights sources (not shown). The specific nature or type of light 204 is not intended to be limiting.

The light 204 may be configured to produce a single type of light, such as white light. In addition, it may be configured to produce a variety of colored light such as red, blue and green. Likewise, each light 204 or light element in a string or other assortment (not shown) may be configured to produce a constant light source or a variable light source such as a strobe.

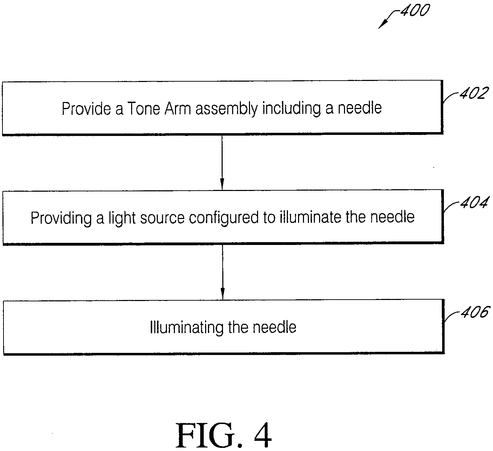

With particular reference to Fig. 4, an illustrative embodiment is depicted. Specifically, an exemplary method of lighting a stylus 400 is disclosed. At block 402, an audio system 100 having a tone arm assembly having a stylus is provided. Exemplary audio systems 100 are discussed and depicted herein. A light source positioned on the tone arm and configured to illuminate the stylus is provided in block 404. Additionally, controlling the light 204 such that a desired stylus illumination and lighted region is produced is provided in block 406.

In an illustrative embodiment a lighted audio system assembly is provided. The system includes a housing and a rotatable platter supported by the housing. The platter is configured to support an album thereon. The system further includes a tone arm assembly rotatable about a hub positioned on the housing. The tone arm assembly includes a headshell opposite the hub, the headshell includes a stylus for engaging the album. Further, the system includes a light source mounted on the tone arm and configured to direct light toward the stylus.

A further illustrative embodiment includes the light source is a light emitting diode (LED).

A further illustrative embodiment includes a light source controller for controlling light source.

A yet further illustrative embodiment includes the light source controller controlling the light sources such that the light source is either on or off.

A still further illustrative embodiment includes the light source controller controlling a type or quality of light that is at least one of a constant light source, white light source, or colored light source.

A further illustrative embodiment includes the colored light source is at least one of a red, green, or blue.

In another illustrative embodiment, a tone arm assembly for a turntable or controller is included. The tone arm assembly includes a tone arm having a first end and a second end. A hub assembly is adjacent the first end. A headshell is adjacent the second end, opposite the first end. A stylus is positioned within the headshell. Also included is a light source for directing light at the stylus.

A further illustrative embodiment includes a controller for controlling the light source wherein the controller is configurable for producing different types of light from the light source.

A further illustrative embodiment includes the light source is configured to provide at least one of a white light, red light, green light, or blue light.

A further illustrative embodiment includes the light source is a light emitting diode (LED).

In another illustrative embodiment, a method of providing a lighted stylus is included. The method incudes providing a tone arm assembly, the tone arm assembly having a hub at a first end, and a headshell at a second end, opposite the first end. The headshell includes a stylus. Also included is providing a light source moveable with the headshell and configured to illuminate the stylus. The method further includes illuminating the stylus to provide a lighted region surrounding the stylus.

A further illustrative embodiment includes controlling the light source.

A still further illustrative embodiment includes controlling the light source such that the light source is either on or off.

The word "illustrative" is used herein to mean serving as an example, instance, or illustration. Any aspect or design described herein as "illustrative" is not necessarily to be construed as preferred or advantageous over other aspects or designs. Further, for the purposes of this disclosure and unless otherwise specified, "a" or "an" means "one or more". Still further, using "and" or "or" is intended to include "and/or" unless specifically indicated otherwise. The illustrative embodiments may be implemented as a method, apparatus, or article of manufacture using standard programming and/or engineering techniques to produce software, firmware, hardware, or any combination thereof to create and control the disclosed embodiments.

The foregoing description of illustrative embodiments of the disclosed subject matter has been presented for purposes of illustration and of description. It is not intended to be exhaustive or to limit the disclosed subject matter to the precise form disclosed, and modifications and variations are possible in light of the above teachings or may be acquired from practice of the disclosed subject matter. The embodiments were chosen and described in order to explain the principles of the disclosed subject matter and as practical applications of the disclosed subject matter to enable one skilled in the art to utilize the disclosed subject matter in various embodiments and with various modifications as suited to the particular use contemplated. It is intended that the scope of the disclosed subject matter be defined by the claims appended hereto and their equivalents.

## Claims

1. A lighted audio system assembly, comprising:
a housing;
a rotatable platter supported by the housing, the platter configured to support an album thereon;
a tone arm assembly rotatable about a hub positioned on the housing, the tone arm assembly including a headshell opposite the hub, the headshell including a stylus for engaging the album; and,
a light source mounted on the tone arm and configured to direct light toward the stylus.

2. The display of claim 1, wherein the light source is a light emitting diode (LED).

3. The display of claim 1 or 2, further comprising a light source controller for controlling light source.

4. The display of claim 3, wherein the light source controller controls the light sources such that the light source is either on or off.

5. The display of claim 3 or 4, wherein the light source controller controls a type or quality of light that is at least one of a constant light source, white light source, or colored light source.

6. The display of claim 5, wherein the colored light source is at least one of a red, green, or blue.

7. A tone arm assembly for a turntable or controller, the tone arm assembly, comprising:
a tone arm having a first end and a second end;
a hub assembly adjacent the first end;
a headshell adjacent the second end, opposite the first end;
a stylus positioned within the headshell; and,
a light source for directing light at the stylus.

8. The system of claim 7, further comprising a controller for controlling the light source wherein the controller is configurable for producing different types of light from the light source.

9. The system of claim 7 or 8, wherein the light source is configured to provide at least one of a white light, red light, green light, or blue light.

10. The system of one of claims 7-9, wherein the light source is a light emitting diode (LED).

11. A method of providing a lighted stylus, comprising:
providing a tone arm assembly, the tone arm assembly having a hub at a first end, and a headshell at a second end, opposite the first end, the headshell including a stylus;
providing a light source moveable with the headshell and configured to illuminate the stylus; and,
illuminating the stylus to provide a lighted region surrounding the stylus.

12. The method of claim 11, further comprising controlling the light source.

13. The method of claim 12, wherein controlling the light source includes the light source being on or off.
